# EUROPÄISCHE PATENTANMELDUNG

(11) **EP 1 304 786 A1**
(43) Veröffentlichungstag der Anmeldung: **23.04.2003**
(21) Anmeldenummer: 01811019.7
(22) Anmeldetag: 18.10.2001
(51) Int. Cl.: H02H 9/04

(54) **Spannungsbegrenzer**

(71) Anmelder: ABB Schweiz AG, 5400 Baden (CH)
(72) Erfinder: Zeller, Peter, 5430 Wettingen (CH); Richter, Bernard, 5430 Wettingen (CH)
(74) Vertreter: ABB Patent Attorneys

(57) **Zusammenfassung**

Der Spannungsbegrenzer dient dem Begrenzen von kurz- oder langzeitig anhaltenden Überspannungen (U). Er weist einen Varistor (1) und einen parallel zum Varistor schaltbaren Entlastungspfad auf. Der Entlastungspfad enthält eine als elektromechanischer Schalter und/oder als Halbleiterschalter ausgeführte und gegenüber dem Varistor (1) eine grosse Dauerstrombelastbarkeit aufweisende Schaltstelle (4). Diese Schaltstelle (4) ist oberhalb eines Grenzwertes mindestens eines von einer der Betriebsgrössen (I_{V}, U_{R}, T_{V}, H) des Varistors (1) abhängigen Signals unter Bildung des Entlastungspfades auslösbar. Langandauernde Überspannungen können so in einfacher Weise begrenzt werden ohne Überlastung des Varistors (1) und ohne grosse Energieaufnahme aus dem beim Begrenzen fliessenden Strom (I).

## Beschreibung

### TECHNISCHES GEBIET

Bei der Erfindung wird ausgegangen von einem Spannungsbegrenzer nach dem Oberbegriff von Patentanspruch 1. Dieser Spannungsbegrenzer dient dem Begrenzen von kurz- oder langzeitig anhaltenden Überspannungen. Er weist einen Varistor und einen parallel zum Varistor schaltbaren Entlastungspfad auf. Bei langandauernden Überspannnungen kommutiert ein beim Begrenzen der Überspannungen im Varistor geführter Strom in den Entlastungspfad.

### STAND DER TECHNIK

Mit dem Oberbegriff nimmt die Erfindung auf einen Stand der Technik von Strombegrenzern Bezug, wie er in einer Schrift der Fa. Soulé électro-mécanique P.O. Box no.1, 65200 BAGNERES-DE-BIGORRE (France) "CLS INTERVAL OF DISCHARGE" (leaflet P 7454 A) beschrieben ist. Ein in dieser Schrift vorgestellter Spannungsbegrenzer weist einen Varistor auf der Basis von Siliciumcarbid auf und einen parallel zum Varistor gelegten und eine Funkenstrecke enthaltenden Entlastungspfad. Beim Auftreten einer langandauernden Überspannung kommutiert ein beim Begrenzen der Überspannnung im Varistor geführter Strom unter Bildung eines in der Funkenstrecke gehaltenen Lichtbogens in den Entlastungspfad. Der Varistor wird dabei entlastet. Im Lichtbogen wird jedoch sehr viel Energie umgesetzt. Daher müssen die Lichtbogenelektroden und das mit diesen Elektroden thermisch gekoppelte Gehäuse des Spannungsbegrenzers äusserst gross dimensioniert sein.

Ein weiterer Spannungsbegrenzer der vorgenannten Art ist in DE 41 24 321 A1 beschrieben. Dieser Spannnungsbegrenzer weist mehrere spannungsbegrenzende Elemente auf. Wird während des Betriebs eines dieser Elemente überlastet, so wird von diesem Element auf ein nächstes spannungsbegrenzendes Element umgeschaltet. Da das zugeschaltete spannungsbegrenzende Element bei langzeitig wirkenden Überspannungen ebenfalls schnell überlastet ist, ist dieser Begrenzer für langzeitig einwirkende Überspannungen nicht geeignet.

### DARSTELLUNG DER ERFINDUNG

Die Erfindung, wie sie in den Patentansprüchen definiert ist, löst die Aufgabe, einen Spannungsbegrenzer der eingangs genannten Art anzugeben, welcher sich durch kompakten Aufbau auszeichnet und dennoch in der Lage ist, langzeitig wirkende Überspannungen wirksam zu begrenzen.

Beim Spannungsbegrenzer nach der Erfindung enthält der Entlastungspfad eine als elektromechanischer Schalter und/oder als Halbleiterschalter ausgeführte und gegenüber dem Varistor eine grosse Dauerstrombelastbarkeit aufweisende Schaltstelle, welche oberhalb eines Grenzwertes mindestens eines von einer der Betriebsgrössen des Varistors abhängigen Signals unter Bildung des Entlastungspfades auslösbar ist. Ein beim Begrenzen einer langzeitig wirkenden Überspannung zunächst im Varistor geführter Strom kann so vor einer Überlastung des Varistors äusserst rasch und mit grosser Zuverlässigkeit in den Entlastungspfad kommutieren. Da der Entlastungspfad keine Funkenstrecke aufweist, sondern im wesentlichen nur einen gegenüber der Funkenstrecke praktisch verlustfreien, niederohmigen elektromechanischen Schalter und/oder Halbleiterschalter, wird im Entlastungpfad kaum Verlustwärme gebildet. Der Spannungsbegrenzer kann so äusserst klein dimensioniert werden. Insbesondere dann, wenn als Schaltstelle ein Halbleiterschalter vorgesehen ist, wird bei der Stromkommutierung zudem die Bildung eines unerwünschten Lichtbogens vermieden. Die Betriebssicherheit und der Einsatzbereich des Spannnungsbegrenzers werden so ganz wesentlich erhöht. Falls erforderlich, kann der vorzugsweise als Leistungshalbleiter ausgebildete Halbleiterschalter in einfacher Weise mit standardisierten, geeignet bemessenen Kühlmitteln gekühlt werden. Die für einen Leistungshalbleiter üblichen Schutzbeschaltungen sind in der Konstruktion zu berücksichtigen. Ist der Leistungshalbleiter zum Beispiel als Thyristor ausgebildet, so sollte zur Begrenzung der Steilheit des Strom eine Induktivität vorgeschaltet und der Thyristor selbst zumindest durch eine TSE Schutzbeschaltung geschützt sein.

Neben dem unverzögerten Einschalten des Entlastungspfades bei Überschreiten einer Triggerbedingung kann zusätzlich eine zeitverzögerte Triggerung des Entlastungspfads zu einer besseren Abstimmung des Zusammenwirkens von Entlastungspfad und Varistor beitragen. Das Einschalten ist dann ausschliesslich ermöglicht, wenn der Grenzwert während einer vorgegebenen Zeitspanne überschritten bleibt.

Der Schaltstelle ist zweckmässigerweise eine Steuereinrichtung mit einem auf ein Schaltelement der Schaltstelle wirkenden Ausgang zugeordnet. Da diese Steuereinrichtung Eingänge für das betriebsgrössenabhängige Signal sowie für gegebenenfalls vorgesehene weitere betriebsgrössenabhängige Signale aufweist sowie eine Auslösebedingungen überprüfende und ein Auslösesignal erzeugende Triggereinheit, kann die Bildung des Auslösesignals sehr genau kontrolliert werden. Durch Aufbereitung der zugeführten Signale in einer Signalverarbeitungseinheit und/oder durch Verstärkung des Auslösesignals in einem Verstärker kann die Genauigkeit des Prozesses zusätzlich verbessert werden. Eine weitere Verbesserung wird erreicht durch Eingänge für zusätzliche, vorzugsweise externe Eingangssignale sowie durch eine in die Triggereinheit integrierte Elektronik oder Recheneinheit zur Verknüpfung der betriebsgrössenabhängigen und der zusätzlichen Eingangssignale nach einem von den Auslösebedingungen bestimmten Steueralgorithmus.

Als Betriebsgrösse kommen vor allem ein vom Varistor geführter Strom, das Magnetfeld dieses Stroms, eine am Varistor anstehende Restspannung und/oder die Temperatur des Varistors in Betracht. Bei Wahl der Restspannung als die Auslösung bewirkende Betriebsgrösse weist die Steuervorrichtung ein oberhalb eines Grenzwerts der Restspannung aktivierbares und als Spannungsbegrenzer ausgeführtes Triggerelement auf, bei Wahl des Varistorstroms oder dessen Magnetfeld als die Auslösung bewirkende Betriebsgrösse hingegen ein oberhalb eines Grenzwerts des Stroms oder des Magnetfelds aktivierbares und als stromstärke - oder magnetfeldstärkeabhängiger Schalter ausgeführtes Triggerelement und bei bei Wahl der Varistortemperatur als die Auslösung bewirkende Betriebsgrösse ein oberhalb eines Grenzwerts der Temperatur aktivierbares und als temperaturabhängiger Schalter ausgeführtes Triggerelement.

### KURZE BESCHREIBUNG DER ZEICHNUNGEN

Die Erfindung wird nachstehend anhand von Ausführungsbeispielen erläutert. Es zeigt:

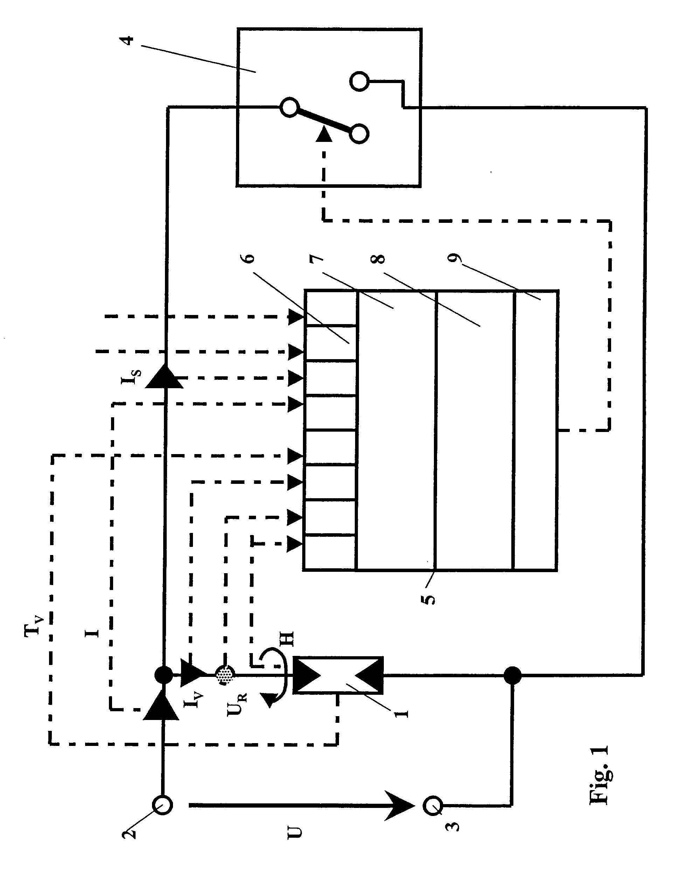

- Fig. 1: ein Prinzipschaltbild der erfindungsgemässen Anordnung zum Begrenzen von kurz- oder langzeitig anhaltenden Überspannungen U mit einem Varistor und mit einem parallel zum Varistor geschalteten Entlastungspfad, welcher eine von einer Betriebsgrösse des Varistors steuerbare Schaltstelle aufweist,

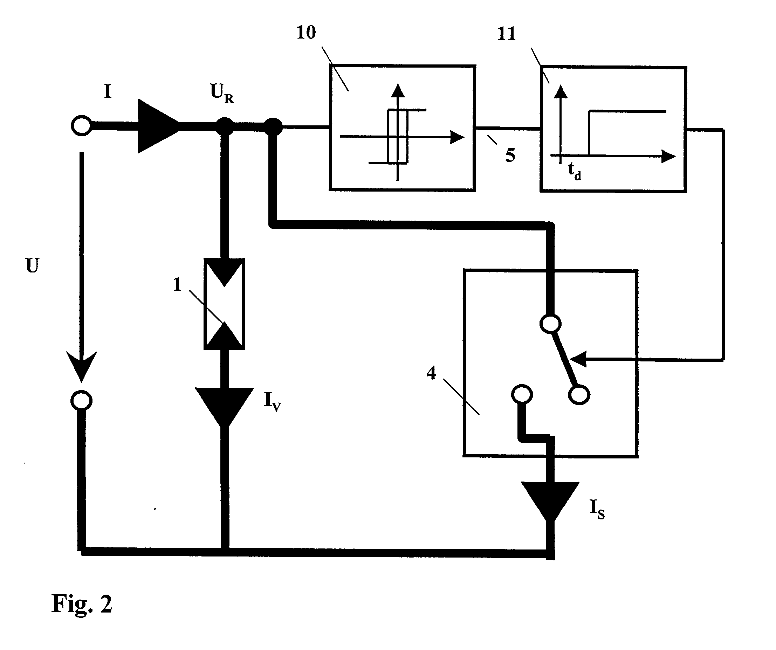

- Fig. 2: ein Prinzipschaltschaltbild einer Ausführungsform des erfindungsgemässen Spannungsbegrenzers gemäss Fig.1, bei der als Betriebsgrösse zur Steuerung der Schaltstelle die von der Überspannung abhängige Restspannung U_{R} des Varistors verwendet wird,

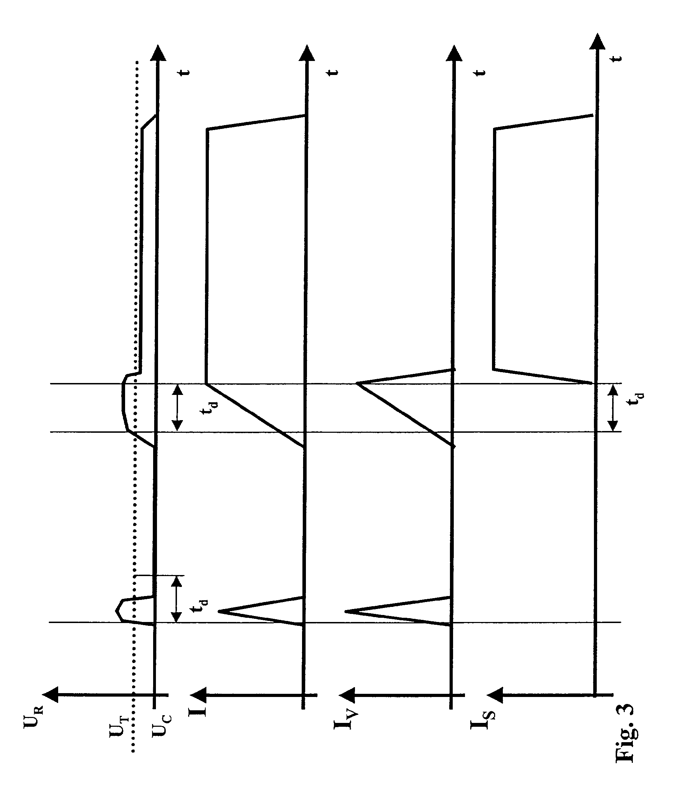

- Fig.3: eine Prinzipdarstellung des am Spannungsbegrenzer gemäss Fig. 2 auftretenden Verlaufs der Restspannung U_{R}, eines durch die Überspannung U hervorgerufenen Stroms I, eines im Varistor geführten Stroms I_{V} und eines durch die Schaltstelle fliessenden Stroms Is jeweils in Abhängigkeit von der Zeit t,

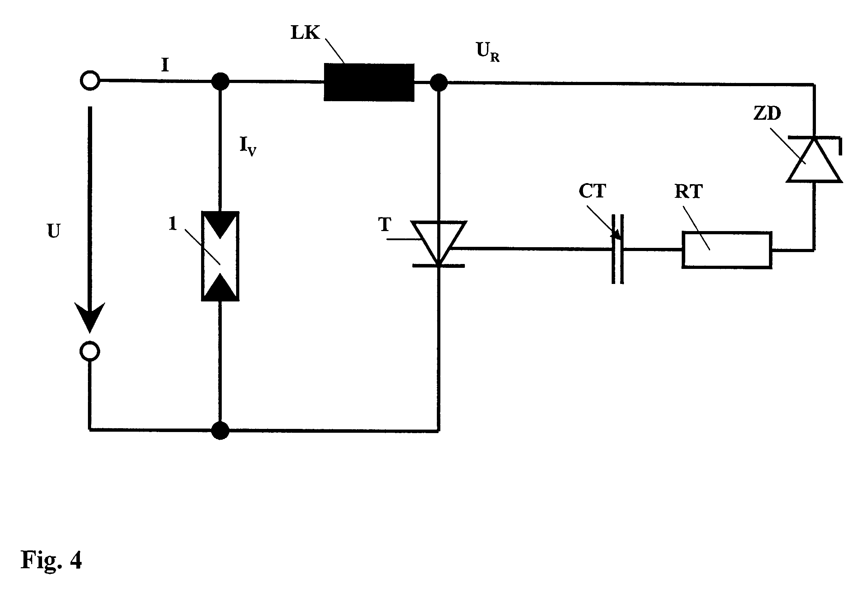

- Fig. 4: ein Schaltbild eines Ausführungsbeispiels des Spannungsbegrenzers gemäss Fig. 2 für Gleichstromanwendungen mit einem Thyristor als Schaltstelle,

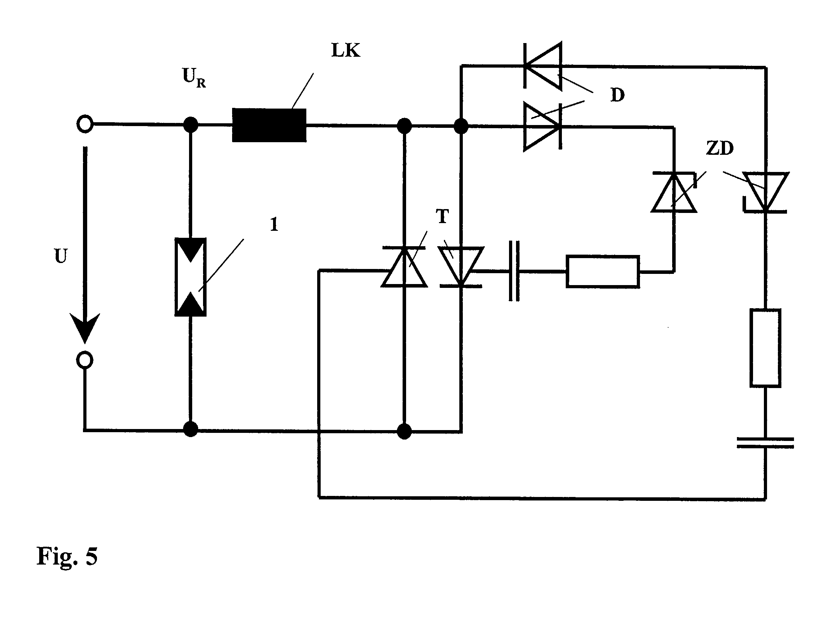

- Fig. 5: ein Schaltbild eines Ausführungsbeispiels des Spannungsbegrenzers gemäss Fig. 2 für Wechselstromanwendungen mit einer antiparallelen Thyristoranordnung als Schaltstelle,

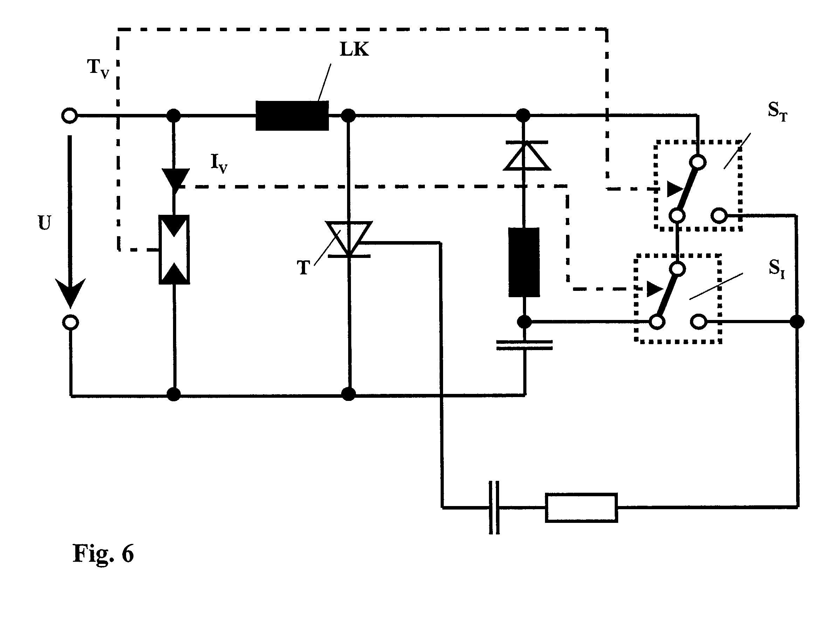

- Fig. 6: ein Schaltbild einer Ausführungsform des Spannungsbegrenzers gemäss Fig.1 für Gleichstromanwendungen mit einem Tyristor als Schaltstelle, bei der als Betriebsgrössen zur Steuerung der Schaltstelle der durch der Varistor fliessende Strom I_{V} und die Temperatur T des Varistors verwendet werden,

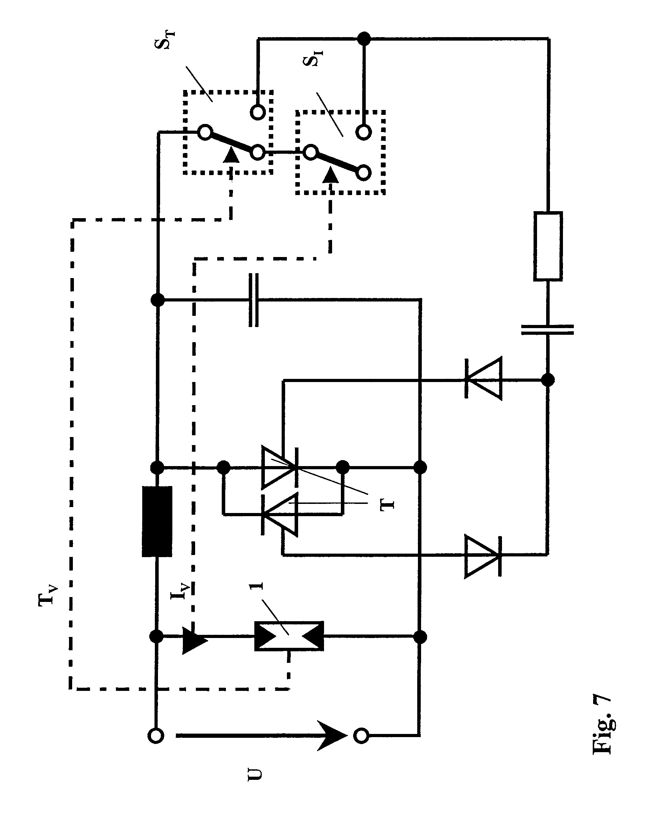

- Fig. 7: ein Schaltbild einer Ausführungsform des Spannungsbegrenzers gemäss Fig.1 für Wechselstromanwendungen mit einer antiparallelen Thyristoranordnung als Schaltstelle, bei der als Betriebsgrössen zur Steuerung der Schaltstelle der durch der Varistor fliessende Strom I_{V} und die Temperatur T_{V} des Varistors verwendet werden,

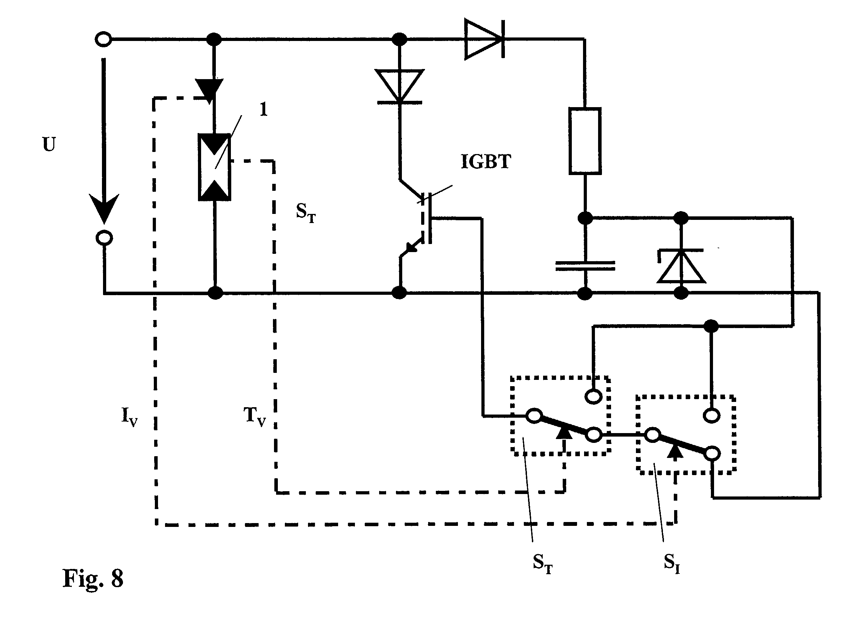

- Fig. 8: ein Schaltbild einer Ausführungsform des Spannungsbegrenzers gemäss Fig.1 für Gleichstromanwendungen mit einem als IGBT als Schaltstelle, bei der als Betriebsgrössen zur Steuerung der Schaltstelle der durch der Varistor fliessende Strom I_{V} und die Temperatur T_{V} des Varistors verwendet werden,

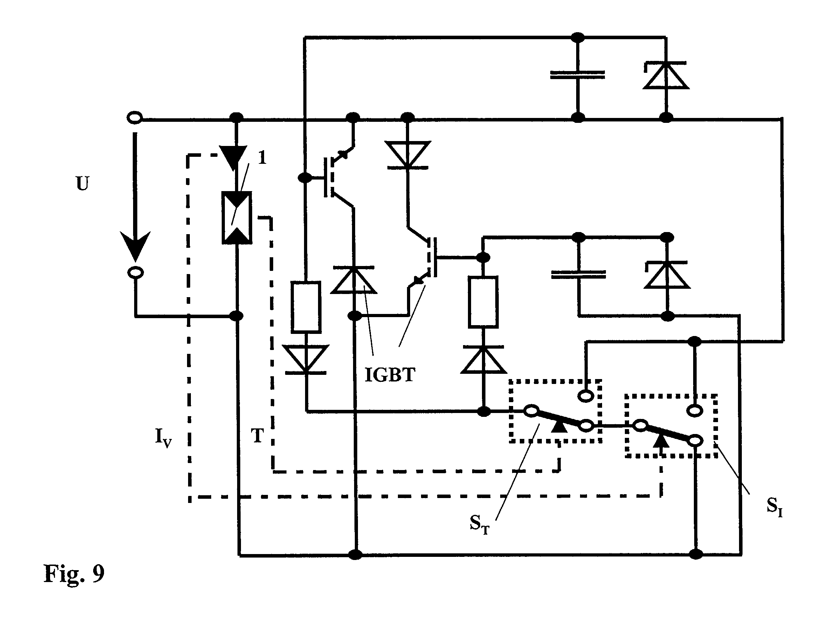

- Fig. 9: ein Schaltbild einer Ausführungsform des Spannungsbegrenzers gemäss Fig. 1 für Wechselstromanwendungen mit einer antiparallelen IGBT-Anordnung als Schaltstelle, bei der als Betriebsgrössen zur Steuerung der Schaltstelle der durch den Varistor fliessende Strom I_{V} und die Temperatur T_{V} des Varistors verwendet werden.

### WEGE ZUR AUSFÜHRUNG DER ERFINDUNG

In den Figuren sind gleiche Teile mit gleichen Bezugszeichen gekennzeichnet. Der in Fig.1 dargestellte Spannungsbegrenzer weist ein spannungsbegrenzendes Element auf, welches als Varistor 1 ausgeführt ist und vorzugsweise Metalloxid, insbesondere Zinkoxid, enthält. Der Varistor 1 ist parallel geschaltet zu einer mit Überspannungen U beaufschlagbaren Strecke, welche von zwei auf unterschiedliches Potential bringbaren Stromanschlüssen 2, 3 begrenzt ist. Beide Stromanschlüsse können Teil einer elektrischen Anlage sein, können aber auch je einer von zwei verschiedenen elektrischen Anlagen, beispielsweise einer Rückstrom führenden Schiene einer elektrischen Bahn und einer in der Nähe der Schiene angeordneten Niederspannungsanlage, beispielsweise einem Fahrscheinautomaten, zugeordnet sein. Der Stromanschluss 2 ist elektrisch leitend verbunden mit einem der beiden Stromanschlüsse des Varistors 1 und mit einem beider Stromanschlüsse einer in einem parallel zum Varistor 1 geschalteten Entlastungspfad angeordneten Schaltstelle 4. Der Stromanschluss 3 und der andere der beiden Stromanschlüsse von Varistor 1 und Schaltstelle 4 befinden sich jeweils auf gleichem Potential. Von nicht bezeichneten Sensoren erfasste Betriebsgrössen des Varistors wirken über eine Steuereinrichtung 5 auf die Schaltstelle 4. Solche Betriebsgrössen umfassen alle Messgrössen, die ein Erkennen der Überlastung des Varistors ermöglichen, wie insbesondere ein durch einen Stromsensor erfassbarer, im Varistor 1 geführter Strom I_{V}, das durch einen Magnetfeldsensor erfassbare magnetische Feld H dieses Stroms, eine am Varistor 1 anstehende Restspannung U_{R} und die mit einem Temperatursensor erfassbare Temperatur T_{V} des Varistors 1. Es kann lediglich eine der Betriebsgrössen auf die Schaltstelle 4 wirken. Zur Erhöhung der Redundanz kann es aber zweckmässig sein zwei und mehr der Betriebsgrössen auf die Schaltstelle 4 wirken zu lassen.

Die der Schaltstelle 4 zugeordnete Steuereinrichtung 5 weist Eingänge 6 für die von den Sensoren ausgegebenen betriebsgrössenabhängigen Signale I_{V}, U_{R}, T_{V} und H und für gegebenenfalls vorgesehene weitere betriebsgrössenabhängige Signale auf. Solche weiteren Signale sind ein durch die Überspannung U hervorgerufener Strom I und ein im Entlastungspfad bzw. in der Schaltstelle 4 geführter Strom I_{S}, welcher sich mit dem Varistorstrom I_{V} zu dem durch die Überspannung hervorgerufenen Gesamtstrom I aufaddiert. Ferner sind Eingänge für zusätzliche Signale von externen Steuerleitungen vorgesehen. In einer Signalverarbeitungseinheit 7 der Steuereinrichtung 5 können die Eingangssignale aufbereitet werden. Aus den aufbereiteten Signale wird in einer Triggereinheit 8 unter Überprüfung von vorgegebenen Auslösebedingungen direkt oder indirekt mit Hilfe eines die aufbereiteten Eingangssignale in einer Recheneinheit oder in einer Elektronik bewertenden Algorithmus ein Auslösesignal für die Schaltstelle gebildet. Das Auslösesignal kann in einem Verstärker 9 verstärkt werden und kann über einen Ausgang der Steuereinrichtung 5 an ein Steuerelement der Schaltstelle 4 geführt werden.

Die Schaltstelle 4 weist ein elektromechanisches Schaltgerät und/oder einen im allgemeinen als Leistungshalbleiter ausgebildeten Halbleiterschalter auf. Der Leistungshalbleiter ist mit Vorteil als Thyristor, Triac, Transistor, IGBT, GTO, MOS-Fet oder FET ausgeführt. Die einzelnen Leistungshalbleitertypen unterscheiden sich in der Belastbarkeit (Überlastverhalten, Spannungsbeanspruchung, zulässige Stromanstiegsgeschwindigkeit) und den Triggermethoden. Somit ergeben sich für spezifische Anwendungen unterschiedliche Vorteile für jeden Halbleitertyp, so dass der Anwendung entsprechend der optimale Typ evaluiert werden kann. Je nach verwendetem Leistungshalbleiter sind typischenspezifische Schutzbeschaltungen (z.B. TSE Schutzbeschaltung für einen Thyristor) und Abschaltkreise (z.B. Kommutierungshilfskreis für einen Thyristor) zu integrieren.

Eine lediglich kurzzeitig andauernde Überspannung mit geringem Energieinhalt wird vom Varistor 1 begrenzt. Eine langandauernde Überspannung mit hohem Energieinhalt wird ebenfalls zunächst vom Varistor 1 begrenzt. Bevor die Belastung des Varistors zu gross wird, wird in der Steuereinrichtung 5 oberhalb eines Grenzwertes mindestens eines von einer der Betriebsgrössen I_{V}, U_{R}, T_{V}, H des Varistors abhängigen Signals ein Auslösesignal gebildet, welches ein Kurzschliessen der eine grössere Dauerstrombelastbarkeit als der Varistor aufweisenden Schaltstelle bewirkt, sofern das betriebsgrössenabhängige Signal nach einer vorgegebenen Zeitspanne noch oberhalb des Grenzwertes liegt.

Anhand der Fig.2 und 3 wird dieses Prinzip an einem erfindungsgemässen Spannungsbegrenzer erläutert, bei dem als Betriebsgrösse zur Steuerung der Schaltstelle 4 die der Überspannung entsprechende Restspannung U_{R} des Varistors verwendet wird. Die mit dem die Restspannung U_{R} führenden Stromanschluss des Varistors 1 einerseits und dem Steuerelement der Schaltstelle 4 andererseits elektrisch leitende verbundene Steuereinrichtung 5 dieses Spannungsbegrenzers weist in Serie geschaltet ein Triggerelement 10 und ein Zeitverzögerungselement 11 mit einer über eine Zeitspanne t_{d} wirkenden Zeitverzögerung auf.

Tritt eine kurzzeitig wirkende Überspannung auf (linker Teil von Fig. 3), so wird der Varistor 1 oberhalb eines vorbestimmten Werts U_{C} der Überspannung leitend und führt dann einen Strom I_{V}. Überschreitet die Überspannung einen weiteren vorbestimmten Wert Spannungswert U_{T}, so gibt das Triggerelement 10 ein Triggersignal ab und wird zugleich das Zeitverzögerungselement 11 aktiviert. Fällt die Überspannung U innerhalb der Zeitspanne t_{d} wieder unter den Wert U_{T}, so verschwindet das Triggersignal noch in dieser Zeitspanne. Die Überspannung wird dann ohne die Gefahr einer Überlastung ausschliesslich durch den Varistor 1 begrenzt. Handelt es sich hingegen um eine langzeitig wirkende und möglicherweise langssam ansteigende Überspannung (rechter Teil von Fig.3), so bleibt das vom Triggerelement 10 abgegebene Triggersignal über die ganze Zeitspanne t_{d} erhalten. Nach Ablauf der Zeitspanne gelangt das Triggersignal über das Zeitverzögerungselement 11 als Auslösesignal an die Schaltstelle 4 und schliesst diese unter Bildung des Entlastungspfads. Der im Varistor 1 geführte Strom I_{V} kommutiert nun in den die Schaltstelle 4 enthaltenden Entlastungspfad. Da die Schaltstelle 4 dauerstromfest ausgebildet ist, kann sie den Strom über einen grossen Zeitraum führen, ohne sich unzulässig hoch zu erwärmen. Dennoch gegebenenfalls anfallende Überschusswärme kann über zusätzlich vorgesehene Kühlelemente weggeführt werden.

Der Spannungsbegrenzer gemäss Fig.2 ist für Gleichstromanwendungen (Fig.4) als auch für Wechselstromanwendungen (Fig.5) bestimmt. Bei der für Gleichstromanwendungen bestimmten Ausführungsform gemäss Fig.4 ist die Schaltstelle 4 als Thyristor T, das Triggerelement 10 als Zenerdiode ZD und das RC-Element mit einer Reihenschaltung eines ohmschen Widerstands RT und einer Kapazität CT zur Begrenzung der Höhe und Dauer des Triggersignals ausgebildet. Das Auslösesignal gelangt nur dann an den Thyristor T, wenn oberhalb des Spannungswerts U_{T} (Fig.3) die Zenerdiode ZD leitend wird. Durch eine Schutzdrossel LK ist sichergestellt, dass der Anstieg des Stroms I_{S} durch die Schaltstelle während der Kommutierung des Varistorstroms I_{V} vom Varistor 1 in den Entlastungspfad kontrolliert erfolgt. Der Thyristor T wird so vor zu grossen Stomsteilheiten geschützt. Bei der für Wechselstromanwendungen bestimmten Ausführungsform gemäss Fig.5 ist die Schaltstelle 4 als Tyristoranordnung mit zwei antiparallel geschalteten Thyristoren T ausgebildet. Jeder dieser beiden Thyristoren ist entsprechend dem Thyristor T der Ausführungsform gemäss Fig.4 mit der Zenerdiode ZD und dem RC-Glied beschaltet. Zwei antiparallel geschaltete und jeweils einer der beiden Zenerdioden vorgeschaltete Dioden D sorgen dafür, dass jeweils nur eine Halbwelle des der Restspannung U_{R} entsprechenden Signals an die Zenerdiode ZD weitergeführt wird.

Bei den Ausführungsformen nach den Figuren 6 bis 9 werden im Unterschied zu den Ausführungsformen nach den Figuren 2, 4 und 5 als Betriebsgrössen zur Auslösung der Schaltstelle 4 der Varistorstrom I_{V} und die Temperatur T_{V} des Varistors verwendet. Anstelle der Zenerdiode ZD sind nun als Triggerelement ein oberhalb eines Grenzwerts des Stroms oder des Magnetfelds aktivierbarer, stromstärke - oder magnetfeldstärkeabhängiger Schalter S_{I} und ein oberhalb eines Grenzwerts der Temperatur T_{V} aktivierbarer, temperaturabhängiger Schalter S_{T} vorgesehen. Bei den für Gleichstromanwendungen vorgesehenen Ausführungsformen nach Fig.6 bzw. 8 ist als Schaltstelle 4 ein Thyristor T bzw. ein IGBT vorgesehen. Bei den für Wechselstromanwendungen vorgesehenen Ausführungsformen nach den Figuren 7 und 9 ist als Schaltstelle 4 eine Anordnung mit zwei antiparallel geschalteten Thristoren T bzw. eine Anordnung mit zwei antiparallel geschalteten IGBT's vorgesehen. Bei den Ausführungsformen nach den Figuren 8 und 9 mit einer mindestens einen IGBT enthaltenden Schaltstelle 4 kann die Schutzdrossel LK entfallen.

Wird beim Überschreiten eines Grenzwertes des Varistorstroms I_{V} oder der Varistortemperatur T_{V} einer beiden Schalter S_{I} oder S_{T} geschlossen, so wird ein Auslösesignal an die Schaltstelle 4 weitergeleitet. Dadurch, dass zwei unabhängig voneinander wirkende Betriebsgrössen zur Bildung des Auslösesignals verwendet werden, wird die Redundanz des Spannungsbegrenzers erhöht.

### BEZUGSZEICHENLISTE

- 1: Varistor
- 2, 3: Stromanschlüsse
- 4: Schaltstelle
- 5: Steuereinrichtung
- 6: Eingänge
- 7: Signalverarbeitungseinheit
- 8: Triggereinheit
- 9: Verstärker
- 10: Triggerelement
- 11: Zeitverzögerungselement
- I: Gesamtstrom
- I_{V}: Varistorstrom
- I_{S}: Strom in Schaltstelle
- U: Überspannung
- U_{C}: vorbestimmter Wert der Überspannung
- U_{R}: Restspannung
- U_{T}: Grenzwert der Restspannung
- T_{V}: Varistortemperatur
- H: Magnetfeld des Varistorstroms
- t_{d}: Zeitspanne
- T: Thyristor
- D: Diode
- ZD: Zenerdiode
- IGBT: IGBT
- LK: Begrenzungsdrossel
- CT: Kapazität
- RT: ohmscher Widerstand

## Patentansprüche

1. Anordnung zum Begrenzen von kurz- oder langzeitig anhaltenden Überspannungen (U) mit einem Varistor (1) und mit einem parallel zum Varistor schaltbaren Entlastungspfad, **dadurch gekennzeichnet, dass** der Entlastungspfad eine als elektromechanischer Schalter und/oder als Halbleiterschalter ausgeführte und gegenüber dem Varistor eine grosse Dauerstrombelastbarkeit aufweisende Schaltstelle (4) enthält, welche oberhalb eines Grenzwertes (U_{T}) mindestens eines von einer der Betriebsgrössen (I_{V}, U_{R}, T_{V}, H) des Varistors (1) abhängigen Signals unter Bildung des Entlastungspfades auslösbar ist.

2. Anordnung nach Anspruch 1, **dadurch gekennzeichnet, dass** die Auslösung ausschliesslich dann ermöglicht ist, wenn der Grenzwert (U_{T}) während einer vorgegebenen Zeitspanne (t_{d}) überschritten ist.

3. Anordnung nach einem der Ansprüche 1 oder 2, **dadurch gekennzeichnet, dass** der Schaltstelle eine Steuereinrichtung (5) zugeordnet ist mit Eingängen (6) für das mindestens eine betriebsgrössenabhängige Signal (I_{V}, U_{R}, T, H) sowie für gegebenenfalls vorgesehene weitere betriebsgrössenabhängige Signale (I, I_{S}), mit einer Auslösebedingungen überprüfenden und ein Auslösesignal erzeugenden Triggereinheit (8) und mit einem auf die Schaltstelle wirkenden Ausgang.

4. Anordnung nach Anspruch 3, **dadurch gekennzeichnet, dass** die Steuereinrichtung zusätzlich eine die betriebsgrössenabhängigen Signale aufbereitende Signalverarbeitungseinheit (7) und /oder einen das Auslösesignal verstärkenden Verstärker (9) aufweist.

5. Anordnung nach einem der Ansprüche 3 oder 4, **dadurch gekennzeichnet, dass** die Steuereinrichtung (5) ferner Eingänge (6) für zusätzliche Eingangssignale aufweist sowie eine in die Triggereinheit (8) integrierte Elektronik oder Recheneinheit zur Verknüpfung der betriebsgrössenabhängigen (I_{V}, U_{R}, T, H) und der zusätzlichen Eingangssignale nach einem von den Auslösebedingungen bestimmten Steueralgorithmus.

6. Anordnung nach einem der Ansprüche 1 bis 5, **dadurch gekennzeichnet, dass** die mindestens eine Betriebsgrösse ein vom Varistor geführter Strom (Iv), das Magnetfeld (H) dieses Stroms, eine am Varistor anstehende Restspannung (U_{R}) und/oder die Temperatur (T_{V}) des Varistors (1) ist.

7. Anordnung nach Anspruch 6, **dadurch gekennzeichnet, dass** die Schaltstelle (4) einen von der Steuereinrichtung (5) ansteuerbaren Leistungshalbleiter aufweist.

8. Anordnung nach Anspruch 7, **dadurch gekennzeichnet, dass** der Leistungshalbleiter gekühlt ist.

9. Anordnung nach einem der Ansprüche 7 oder 8, **dadurch gekennzeichnet, dass** bei Wahl der Restspannung (U_{R}) als die Auslösung bewirkende Betriebsgrösse die Steuervorrichtung (5) ein oberhalb eines Grenzwerts (U_{T}) der Restspannung aktivierbares und als Spannungsbegrenzer ausgeführtes Triggerelement (10) aufweist.

10. Anordnung nach einem der Ansprüche 7 bis 9, **dadurch gekennzeichnet, dass** bei Wahl des Varistorstroms (I_{V}) oder dessen Magnetfeld (H) als die Auslösung bewirkende Betriebsgrösse die Steuervorrichtung (5) ein oberhalb eines Grenzwerts des Stroms oder des Magnetfelds aktivierbares und als stromstärke - oder magnetfeldstärkeabhängiger Schalter (S_{I}) ausgeführtes Triggerelement aufweist.

11. Anordnung nach einem der Ansprüche 7 bis 10, **dadurch gekennzeichnet, dass** bei Wahl der Varistortemperatur (T_{V}) als die Auslösung bewirkende Betriebsgrösse die Steuervorrichtung (5) ein oberhalb eines Grenzwerts der Temperatur aktivierbares und als temperaturabhängiger Schalter (S_{T}) ausgeführtes Triggerelement aufweist.

12. Anordnung nach einem der Ansprüche 9 bis 12, **dadurch gekennzeichnet, dass** die Steuervorrichtung ein die vorgegebene Zeitspanne bestimmendes und zwischen Triggerelement (10) und Leistungshalbleiter (T, IGBT) angeordnetes Zeitverzögerungselement (11) aufweist.

13. Anordnung nach einem der Ansprüche 7 bis 12, **dadurch gekennzeichnet, dass** bei Verwendung eines als Thyristor (T) ausgebildeten Leistungshalbleiters dem Thyristor eine Induktivität (LK) vorgeschaltet ist.
